# EUROPEAN PATENT SPECIFICATION

(11) **EP 0 642 213 B1**
(45) Date of publication and mention of the grant of the patent: **08.09.1999**
(21) Application number: 94305685.3
(22) Date of filing: 01.08.1994
(51) Int. Cl.: H02P 6/08

(54) **Variable speed motors and control thereof**
Motoren mit veränderlicher Geschwindigkeit und deren Steuerung
Moteurs à vitesse variable et réglage pour ceux-ci

(30) Priority: 18.08.1993 US 108328; 28.03.1994 US 219022
(43) Date of publication of application: 08.03.1995
(73) Proprietor: GENERAL ELECTRIC COMPANY, Schenectady, NY 12345 (US)
(72) Inventor: Young, Glen Chester, Fort Wayne, Indiana 46816 (US); Bonner, Guy, Jr., Huntington, Indiana-90 (US); Schneider, Eric Duane, Carmel, Indiana 46032 (US); Kiefer, James Ronald, Fort Wayne, Indiana 46825 (US)
(74) Representative: Goode, Ian Roy

(56) References cited:
- US-A- 4 752 724
- US-A- 4 876 491
- US-A- 5 233 275
- SOVIET PATENT ABSTRACTS, S-X sections, week 8945, December 20, 1989, DERWENT PUBLICATIONS LTD., London; & SU-A-1457 139 (MOSC. POWERINST.)

## Description

This invention generally relates to any controllable, variable speed motor and to a current regulation circuit for controlling circulating currents in the motor and, particularly, to a current regulation circuit for detecting and controlling circulating currents in the motor with a bi-directional current sensing circuit.

A variable speed motor system according to the present invention typically includes a brushless DC motor having an inverter bridge for driving the motor. The inverter bridge has a number of power switching devices with a flyback diode coupled to each of the devices and is used to connect the motor's windings to a power supply through a power supply link. The power supply link has positive and negative rails connecting the motor to the power supply. Generally, two windings of a three-phase motor are energized at a time and the power is pulse width modulated for control purposes. Such a motor system provides pulse width modulation (PWM) of the power to the windings by turning on and off one of the power switching devices. Under the normal PWM control scheme, the motor system turns off one device at a time which causes a flyback current to circulate in the inverter bridge. Such circulating currents result from energy stored in the phase winding inductances and flow through one power device and one diode in the inverter bridge. In normal operation, circulating currents decay rapidly because the motor back electromotive force (EMF) opposes their flow. In abnormal operation, however, circulating currents are out of position and the back EMF voltage causes them to increase rather than to decay which can result in damage to the current-carrying power devices as well as to the motor's permanent magnets. A momentary reversal of rotation at start-up or being out of position due to a failure to properly sense rotor position are examples of abnormal operation causing increasing circulating currents.

Generally, current sensors are required in all phases of the motor to determine what currents are in the motor. Further, systems employing only a single current sensing element are unable to detect circulating currents because they cannot be observed in a shunt resistor (or other current sensor) in the power supply link.

Brushless DC motors are disclosed in U.S. Patent No. 4,757,241.

### Summary of the Invention

Among the several objects of this invention may be noted the provision of an improved current regulation circuit for a variable speed motor which permits use of a single current sensing element; the provision of such a current regulation circuit which permits detection and control of abnormal circulating currents in the motor; the provision of such a current regulation circuit which prevents false indications of abnormal circulating currents due to diode recovery currents; the provision of such a current regulation circuit which provides a degree of safety and overcurrent protection from abnormal circulating currents without having continuous knowledge of the motor winding currents; and the provision of such a current regulation circuit which is economically feasible and commercially practical.

In accordance with the invention, there is provided a motor, an application specific integrated circuit for use with a motor and a method of regulating a motor as claimed in the accompanying claims.

Briefly described, a variable speed motor according to the present invention includes a stationary assembly having windings adapted for energization in at least one preselected sequence and a rotatable assembly in magnetic coupling relation to the stationary assembly. A power supply link connects the windings to a power supply and includes power switching devices for selectively energizing the windings in the preselected sequence by selectively connecting the power supply link to the windings to produce an electromagnetic field for rotating the rotatable assembly. The power switching devices each have a conducting state and a nonconducting state. The current regulation circuit includes a timing circuit, a current sensing circuit and a control circuit. The timing circuit defines preset periods during which each of the power switching devices may be nonconducting. The current sensing circuit senses current in the power supply link. The control circuit controls the power switching devices so that each of the power switching devices is nonconducting when the sensed current exceeds a peak current reference level during the preset periods. In this manner, the current regulation circuit controls current which circulates during periods when only one power switching device is conducting.

In another form, the invention is directed to a method of operating a system for driving a rotatable component. The system comprises a motor including a stationary assembly having windings adapted for energization in at least one preselected sequence and a rotatable assembly in magnetic coupling relation to the stationary assembly. The rotating assembly is in driving relation with the rotatable component. A power supply link connects the windings to a power supply and includes power switching devices each having a conducting state and a nonconducting state. The method includes the step of selectively energizing the windings in the preselected sequence by connecting the power supply link to the windings to produce an electromagnetic field for rotating the rotatable assembly. Further, the method includes regulating current by defining preset periods during which each of the power switching devices may be nonconducting, sensing current in the power supply link and controlling the power switching devices so that each of the power switching devices is nonconducting when the sensed current exceeds a peak current reference level during the preset periods.

Other objects and features will be in part apparent and in part pointed out hereinafter.

### Brief Description of the Drawings

Fig. 1 is a block diagram of one preferred embodiment of a variable speed motor drive system of the invention and including a bi-directional current comparator circuit and a control circuit according to the invention.

Figs. 2A-D illustrate currents in an inverter bridge driving the motor of Fig. 1 according to the invention.

Fig. 3 is a schematic diagram of the bi-directional current comparator circuit of Fig. 1 according to the invention.

Fig. 4 is a schematic diagram of the control circuit of Fig. 1, including a blanking circuit, according to the invention.

Figs. 5A-B illustrate another preferred embodiment of the invention including an alternative bi-directional current comparator circuit and including an alternative control circuit according to the invention.

Corresponding reference characters indicate corresponding parts throughout the drawings.

### Detailed Description of Preferred Embodiments

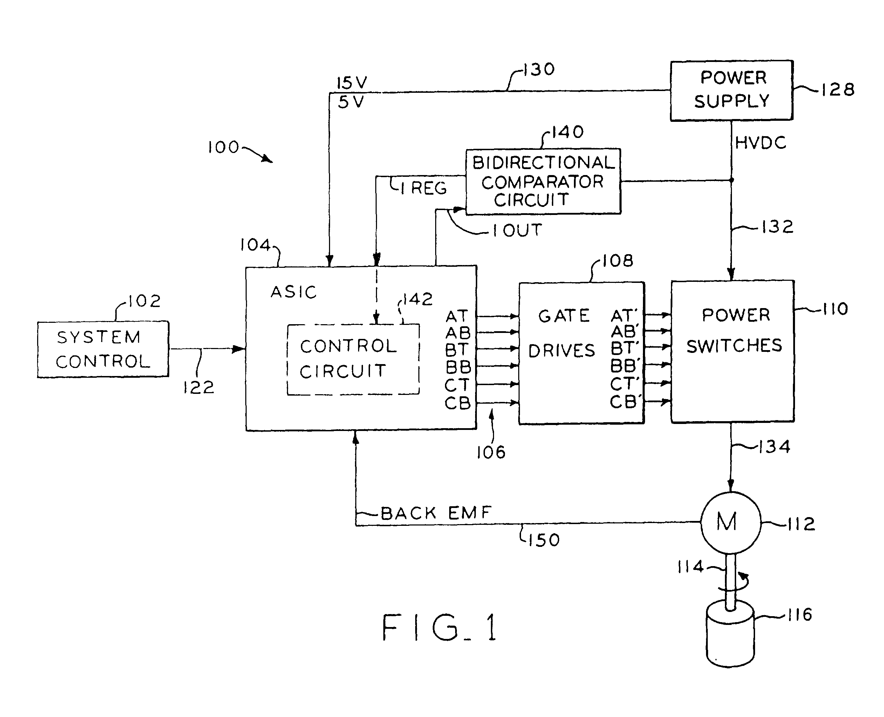

Fig. 1 shows a system 100 according to one preferred embodiment of the present invention. The system 100 includes a system control 102 which provides system control signals, such as a temperature signal, to an application specific integrated circuit (ASIC) 104. The ASIC 104 may be alternatively embodied as a universal electronically commutated motor integrated circuit (UECM IC, not shown). ASIC 104 provides gate drive signals via lines 106 for electronically controlling a plurality of gate drives 108 which provide enough voltage to switch a plurality of power switches 110. Preferably, the gate drives 108 provide voltage signals shifted from 5 volts to 15 volts for driving the power switches 110 and condition the signals provided from ASIC 104 via line 106 for optimal operation of power switches 110. In turn, power switches 110 control rotation in any controllable, variable speed motor 112 - such motors include a brushless DC motor, such as an electronically commutated motor, or a switched reluctance motor.

The motor 112 of the present invention has a stationary assembly, or stator (not shown), and a rotatable assembly, or rotor (not shown). The rotatable assembly is in magnetic coupling relation to the stationary assembly and is mechanically connected via a shaft 114 to a particular device to be driven, such as a rotatable component 116. In order to control the speed of the component 116, system 100 controls the speed of motor 112 by controlling the power delivered to the load. Preferably, system 100 regulates torque to obtain the desired motor speed by matching the load and motor loss demand torque at the desired speed.

A power supply 128 provides power via line 130 to operate ASIC 104 which drives power switches 110 by gate drives 108. The power supply 128 also provides high voltage DC power via line 132 to power switches 110 for commutating the windings included in the stationary assembly of motor 112. Power switches 110 selectively provide power via line 134 to the windings of motor 112 in at least one preselected sequence by switching the power supply 128 in connection with the windings. As such, lines 132 and 134 in combination with power switches 110 constitute a power supply link for connecting power supply 128 to the windings of motor 112.

According to the invention, ASIC 104 generates a commutation signal which causes system 100 to produce a peak current that matches the load torque demand in response to a peak current reference signal IOUT. Matching torque load with produced torque causes motor 112 to operate at a desired speed. The commutation signal includes a series of commutation pulses wherein each pulse causes a corresponding switching event of power switches 110. The windings are adapted to be commutated in at least one preselected sequence and power switches 110 selectively provide power to the windings of motor 112 in the preselected sequence. Current flow in the windings produce an electromagnetic field for rotating the rotating assembly of motor 112. ASIC 104 preferably controls the speed of motor 112 which in turn controls the speed of component 116.

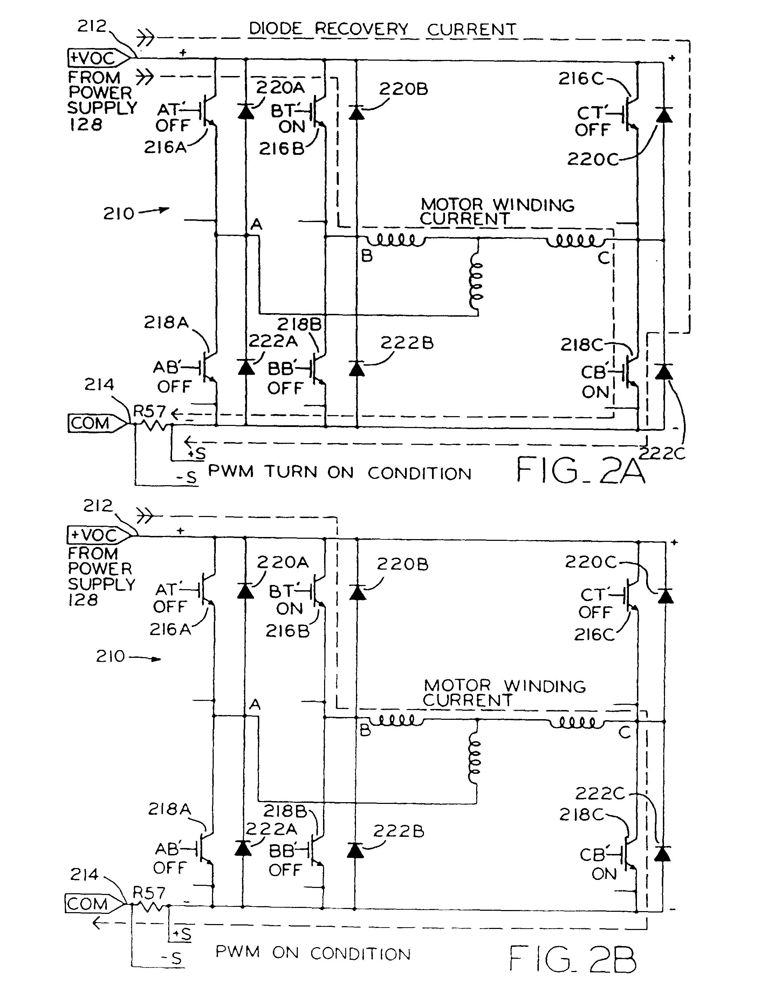

In a preferred embodiment of the invention, power switches 110 consist of an inverter bridge which has a plurality of switches and corresponding flyback diodes (shown in detail in Figs. 2A-D). ASIC 104 commands two of three windings of motor 112 to be energized at a time and pulse width modulates the power being applied to the energized windings for control purposes. System 100 provides pulse width modulation (PWM) control of the power to the windings by turning on and off one of power switches 110. By doing so, the PWM control scheme of system 100 causes a flyback current to circulate when only one of power switches 110 and one flyback diode are conducting.

As shown in Fig. 1, system 100 also includes a bidirectional current comparator circuit 140 for sensing current in the power supply link. The bi-directional current comparator 140 cooperates with a control circuit 142 resident in ASIC 104 for regulating current in system 100. Particularly, the control circuit 142 and bi-directional comparator 140 regulate circulating currents in the inverter bridge during periods when only one of power switches 110 is conducting. Fig. 1 illustrates bi-directional comparator 140 external to ASIC 104 and control circuit 142 internal to ASIC 104. Alternatively, both circuits may be either external or internal to ASIC 104.

Fig. 1 further illustrates that ASIC 104 receives a signal via line 150 from motor 112 representative of a back electromotive force (EMF) in the windings. In a preferred embodiment, the back EMF signal provides information relating to detection of zero crossings for sensing the position the rotating assembly of motor 112. Preferably, each of the commutation pulses of the commutation signal corresponds to a zero crossing. As described above, motor 112 has two of its three windings energized at any given time during operation for developing torque. ASIC 104 selects the unenergized winding for position sensing by observing the motor phase back EMF waveforms when current in the selected phase has decayed to zero. A back EMF sensing network (not shown) detects the zero crossings of the difference between the back EMF voltage of the selected winding of motor 112 as compared to a reference level. The reference level is, for example, the sum of the voltages of the energized windings.

ASIC 104 preferably determines rotor position as a function of the zero crossings and generates commutation signals in response thereto. The commutation instances of a motor phase are determined from the information about the zero crossings of back EMF in that phase. Torque production in a phase of motor 112 is determined by the product of the current in the phase and the back EMF of that phase. It is necessary to energize a winding of motor 112 when the back EMF has crossed zero in the direction that will oppose the voltage energizing the winding to sustain positive torque. At low speeds, for example, it is convenient to energize a winding of motor 112 when it is experiencing maximum rotor flux.

In order to detect zero crossings, ASIC 104 includes a multiplexer circuit (not shown) for multiplexing the back EMF signal (received via line 150). ASIC 104 compares the multiplexed signal to the reference level input signal to obtain a comparison signal. A noise timer (not shown) filters the comparison signal before it is input to a position sensing circuit (not shown). The position sensing circuit provides a zero crossing detector signal to which ASIC 104 responds. ASIC 104 controls commutation as a function of the elapsed time between commutations and zero crossings and generates gate drive signals at lines 106 for driving power switches 110 in response to the position sensing.

As shown in Figs. 2A-D, power switches 110 are part of a three-stage full-bridge inverter 210 having a positive rail 212 and a negative rail 214 supplied by power supply 128. Preferably, power switches 110 of the inverter bridge 210 include three upper switches 216A, 216B and 216C and three lower switches 218A, 218B and 218C. Flyback diodes 220A, 220B and 220C and 222A, 222B and 222C are coupled in an anti-parallel relationship with each switch of switches 216A-C and 218A-C, respectively. Each phase connects to power supply 128 through one of upper switches 216A-C and one of lower switches 218A-C. In the illustrated embodiment, one switch is closed for each winding of motor 112 to be energized so that power switches 110 are activated in pairs. Power switches 216A and 218A correspond to phase A; power switches 216B and 218B correspond to phase B; and power switches 216C and 218C correspond to phase C.

A preferred excitation scheme for motor 112 involves three-phase excitation with trapezoidal current excitation. Two switches are commanded on during each motoring interval, one from the upper set of switches 216A-C and one from the lower set of switches 218A-C. Current flows in only two of the three motor phases during each excitation interval. ASIC 104 selects which of upper switches 216A-C and lower switches 218A-C is to be used to pulse width modulate the power applied to the windings of motor 112 at a given time.

Phase currents of motor 112 can be sensed using shunt resistors, current transformers, Hall-effect current sensors or other sensors or circuits. As shown in Figs. 2A-D, a shunt resistor R57 is placed in the negative rail 214 of inverter bridge 210. Motor phase currents only flow through the shunt resistor R57 when power is being exchanged from power supply 128 to motor 112 and vice versa. Although shunt R57 senses motor phase currents, it cannot directly detect circulating currents in inverter bridge 210 because shunt R57 is open circuited during periods when only one of power switches 110 is conducting.

As an example of the operation of inverter bridge 210, gate drives 108 drive power switches 110 to connect both the, B phase and the C phase to power supply 128 by causing upper switch 216B and lower switch 218C to be in the conducting state. ASIC 104 controls lower switch 218C to pulse width modulate the power being applied to the energized phases. In this example, the unenergized A phase is used for back EMF sensing. Fig. 2A illustrates current flow in inverter bridge 210 immediately at turn-on of switches 216B and 218C. At this instant in time, both switch 216B and switch 218C are in the conducting state and switch 218C will be used for pulse width modulation. Further, a diode recovery current flows through diode 220C before sufficient charge has been removed to establish diode blocking. Both motor winding current and diode recovery current flow through shunt R57.

With respect to the diode recovery current, the flyback diodes 220A-C and 222A-C, each coupled to one of switches 216A-C and 218A-C, generally comprise 1) a heavily doped n type substrate, 2) a lightly doped n- epitaxial layer of specified thickness and 3) a heavily doped p type region. The heavily doped p type region forms the anode of diodes 220A-C and 222A-C. The basic diode pn junction does not require the middle n- epitaxial layer yet the ability to withstand voltage is significantly improved by this lightly doped n- layer. The forward conduction of diode 220A-C and 222A-C is accomplished by the injection of carriers (electrical charge) into the lightly doped region without unduly affecting forward voltage drop when diodes 220A-C and 222A-C are in conduction. At turn-off, a quantity of electrical charge is swept from the lightly doped n- layer to establish current blocking in diodes 220A-C and 222A-C. As the quantity of current being conducted increased, the amount of charge increases to a peak while the voltage remains only a few volts reversed on diodes 220A-C and 222A-C. When sufficient charge has been removed to establish diode blocking, the reverse voltage increases and an additional quantity of charge is required to charge the capacitance of the blocking junction. For these reasons, diode recovery currents flow through inverter bridge 210 at turn-on.

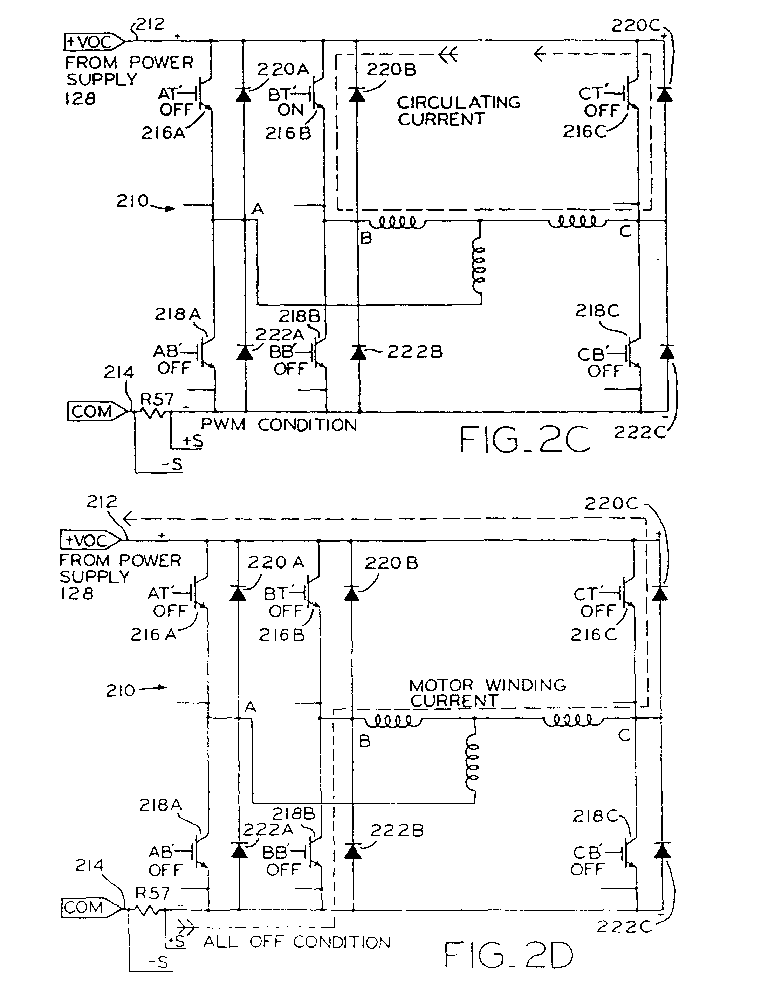

As shown in Fig. 2B, the diode recovery current normally decays and current flows in the B and C windings when switch 216B and switch 218C are conducting. The motor winding current continues to flow through shunt R57. Fig. 2C shows the circulating currents existing when switch 218C is in the nonconducting state. As described above, the PWM control of system 100 turns off one of power switches 110 at a time (lower switch 218C in Fig. 2C) which causes a flyback current to circulate through the conducting power switch (upper switch 216B) and one of the flyback diodes (diode 220C). However, such currents do not flow in rail 214 and, thus, shunt resistor R57 (or similar current sensor) is unable to observe these circulating currents. In normal operation, circulating currents decay rapidly because the motor back EMF opposes their flow. In abnormal operation, however, circulating currents are out of position and the back EMF voltage causes them to increase rather than to decay. A momentary reversal of rotation at start-up or being out of position due to a failure to properly sense rotor position are examples of abnormal operation causing increasing circulating currents.

Generally, circulating currents which have not decayed below a current regulate threshold occur when motor 112 is first started. At start-up, there is as great a likelihood of the rotor position being in advance of the intended field rotation as there is of it being behind. Out-of-position circulating currents are produced when the advancing field forces a reversal in rotor rotation when the rotor has started in a direction opposite to the field rotation. In low power motor drives, such currents are managed by the overcurrent rating in power switches 110 and the permanent magnets (not shown) of motor 112. However, in higher power motor drives, over rating the motor magnets and power switches 110 is not economically feasible.

As described above, direct detection of increasing circulating current by shunt R57 is not possible. However, circulating current is inferred by the response at the turn-on of the PWM power switch (lower power switch 218C in Fig. 2A). The inference is based on the expectation that had the current decayed normally, a period of time after PWM turn-on will be required before the current regulate threshold is reached. If the current regulate threshold is signaled during a period immediately following turn-on, then the fact that the circulating current did not decay and, thus, that an abnormal condition exists, is inferred. For these reasons, the diode recovery current which flows in inverter 210 immediately at turn-on complicates the inference of an out-of-position or otherwise abnormal circulating current in system 100.

Fig. 2D illustrates current flowing back to power supply 128 from the windings when each of power switches 216A-C and 218A-C are not conducting. If both of upper switches 216A-C and lower switches 218A-C are turned off, then the currents in the windings are forced through two flyback diodes (diodes 222B and 220C), shunt resistor R57 and a bulk capacitor (not shown) connected across rails 212 and 214. Current passes through shunt R57 in the reverse direction until all of the energy stored in the windings is extracted. Since the current through shunt R57 is now of an opposite polarity, voltage across shunt R57 from -S to +S is essentially positive. Therefore, abnormal circulating currents are reduced to an acceptable level.

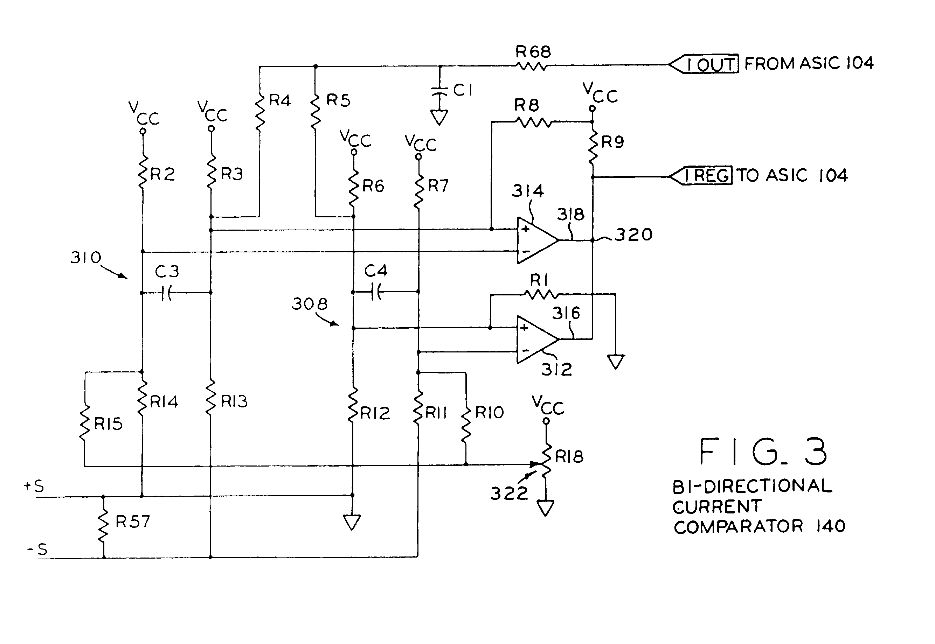

Fig. 3 illustrates bi-directional current comparator circuit 140 in detail including a pair of resistor-capacitor networks 308 and 310 for effecting control of peak current. Bi-directional comparator 140 senses the peak current reference command IOUT provided by ASIC 104. The signal IOUT is a variable duty cycle signal representative of the peak current or torque requirement of motor 112. As described above, voltage is developed across shunt resistor R57 by current supplied to the windings of motor 112. In this manner, system 100 senses motor phase currents by the current flowing through shunt resistor R57 when power is being exchanged from power supply 128 to motor 112 and vice versa.

A pair of comparators 312 and 314 respond to the normal currents delivered from the bulk capacitor to motor 112 as well as to the reverse currents supplied from the motor inductance back to the bulk capacitor when both upper power switches 216A-C and lower power switches 218A-C are first turned off. As shown in Figs. 2A-D, +S and -S define the positive and negative directions of current in shunt R57. The divider networks 308 and 310 bias the comparators 312 and 314 into a common mode range. Resistors R6, R7, R11 and R12 and a capacitor C4 form divider network 308. Similarly, resistors R2, R3, R13 and R14 and a capacitor C3 form divider network 310. When resistors R4 and R5 are pulled positive, networks 308 and 310 are upset in a direction so that an increase in the absolute current in shunt R57 (negatively for comparator 312 and positively for comparator 314) to cause a low transition of the connected outputs 316 and 318 of comparators 312 and 314, respectively. In other words, the voltage at -S is more negative with respect to common for positively directed currents or the voltage at -S is more positive with respect to common for negatively directed currents. Likewise, when resistors R10 and R15 are pulled positively, networks 308 and 310 are upset in a direction requiring a decrease in the absolute current in shunt R57 to cause a high to low transition of the connected outputs 316 and 318.

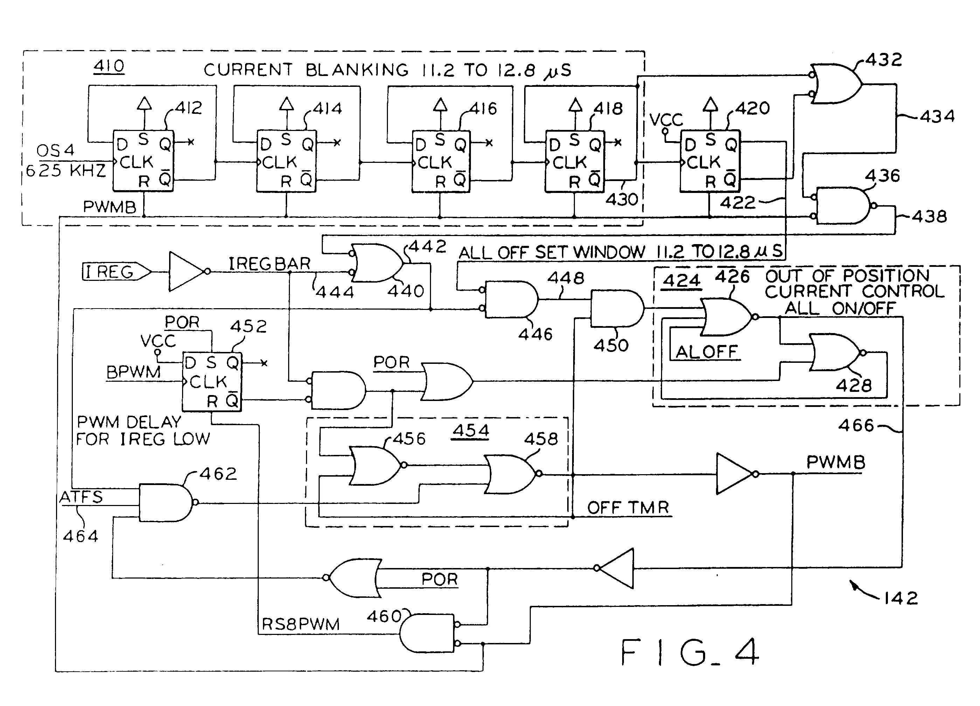

Outputs 316 and 318 are commonly connected at a node 320 and provide a signal IREG to ASIC 104 representative of an overcurrent condition. Preferably, IREG is logic level low when current in shunt R57 exceeding the current regulate threshold. System 100 regulates circulating current in motor 112 by turning off power to each of the windings in response to IREG being low during a predetermined window of time (described in detail with respect to Fig. 4).

Fig. 3 further illustrates a potentiometer 322 including a resistor R18 for adjusting the maximum current threshold value through the adjustment afforded by the resistors R10 and R15. The potentiometer 322 acts to calibrate bi-directional comparator 140 by setting a maximum current magnitude. Comparators 312 and 314 signal that absolute shunt current has exceeded the peak regulate current threshold by a low voltage output at 316 and 318 (IREG low). In response to a low IREG signal during the predetermined window of time, each of power switches 110 are nonconducting until the overcurrent condition is reduced. In a preferred embodiment, each of power switches 110 are nonconducting for at least a predetermined amount of time in response to the abnormal circulating current condition.

As described above, system 100 essentially infers the existence of abnormal circulating currents when an overcurrent condition exists in a period of time immediately following turn-on of power switches 110. However, a PWM circuit also contends with a momentary delivery of current to shunt R57 due to the diode recovery current. The diode recovery current, caused by the forced turn-off of the flyback recovery diodes 220A-C and 222A-C protecting power switches 216A-C and 218A-C, exceeds the instantaneous circulating current by a substantial amount. Thus, diode recovery current being added to the winding immediately at turn-on, even when the winding current has decayed, complicates the inference of abnormal circulating currents. The conventional means for preventing an incorrect response, namely a false indication of abnormal circulating currents, is a combination of capacitor filtering on the input and output of a current comparator.

As described in detail below, system 100 advantageously exempts a predetermined interval of time (approximately 10 microseconds) from observation of shunt R57 immediately following the PWM transistor (power switch 218C) being turned on as an alternative to heavily filtering current comparator 140. A timed blanking interval at the turn-on of the PWM period is designed to ignore the output of current comparator 140 until a sufficient time has elapsed for diode recovery current to decay. If the sensed current still exceeds the threshold value at the conclusion of the predetermined blanking interval and during the predetermined window, then a condition exists requiring that both power devices (upper switch 216B and lower switch 218C) be turned off to bring the current under control. In this respect, current regulation is achieved by turning off all of power switches 110 rather than just one as would be the response for normal PWM operation and abnormal circulating currents are reduced.

Referring further to Fig. 3, the determination that circulating currents exceed the current regulate threshold is also complicated by electrical noise present in every switch mode power circuit. The differential mode capacitors C3 and C4 assist in the filtering of electrical noise in comparator circuit 140. Advantageously, capacitors C3 and C4 are fewer in number, locations and of lesser value than the capacitors which would otherwise be necessary if the purpose was filtering diode recovery current.

Fig. 4 illustrates a preferred embodiment of control circuit 142 including a ripple counter 410 for timing the blanking interval. Preferably, the blanking interval is predetermined to be 11.2 to 12.8 microseconds in duration to allow the normal decay of diode recovery current. The ripple counter 410 is comprised of D flip flops (DFF) 412, 414, 416 and 418 and is preferably clocked at 625 kHz by a clock signal OS4 input to DFF 412. At the end of the diode recovery current blanking interval, a DFF 420 initiates a window of time (ALL OFF SET WINDOW) for setting an ALL OFF condition. Only during the ALL OFF SET WINDOW does the acknowledgment of a low IREG signal from current comparator 140 initiate the ALL OFF condition commanding each of power switches 110 to be nonconducting. By defining the window, counter 410 constitutes a timing circuit for defining preset periods during which each of the power switching devices 110 may be nonconducting. Preferably, the window is equal in duration to the diode recovery current blanking interval because the DFF 420, which is an extension to ripple counter 410, causes ripple counter 410 to count twice.

In the embodiment illustrated in Fig. 4, DFF 420 provides the ALL OFF SET WINDOW via line 422. An RS flip flop (RSFF) 424 comprised of NOR gates 426 and 428 stores ALL ON/OFF status. The blanking interval terminates when the output signal of DFF 418 goes low at line 430 which in turn causes the output of a gate 432 to go high at line 434. The high output at line 434 causes the output of a gate 436 to go high at line 438, thus, signaling the end of the predetermined blanking interval. In this manner, a gate 440 is free to reflect at line 442 the inverse of IREGBAR. The signal IREGBAR is input to the gate 440 at line 444 and represents the inverse of the IREG signal output from bi-directional current comparator 140. Thus, the output of gate 440 at line 442 represents the IREG signal when a logic level high is present at line 438.

Preferably, control circuit 142 further includes a gate 446 which permits the ALL ON/OFF status of RSFF 424 to be reset during the time that the output of DFF 420 at line 422 remains low (the ALL OFF SET WINDOW). In other words, the gate 446 has a high output via line 448 when the IREG signal is low during the ALL OFF SET WINDOW. An AND gate 450 ensures that the race between a subsequent low IREG signal, a high PWMB signal and reset of DFF 420, is not falsely seen as a condition to reset the ALL ON/OFF status of RSFF 424. The PWMB signal represents the inverse of the PWM signal.

RSFF 424 sets the ALL ON/OFF status by a power-on-reset signal POR or by a high IREG signal along with the storage in a DFF 452 of a begin PWM signal BPWM. In a preferred embodiment of the invention, the BPWM signal commands the beginning of a commutation sequence and is generated either by the timing out of an off timer circuit (not shown) or by commutation to the next winding. The off timer circuit is preferably included in ASIC 104 and regulates the current in the windings of motor 112 as a function of the peak current reference value IOUT by turning off power to each of the windings for a predetermined amount of time based on the interval between zero crossings.

Fig. 4 further illustrates an RSFF 454 embodying a PWM latch. The RSFF 454 is comprised of NOR gates 456 and 458. As described above, the DFF 452 stores the request to begin PWM. DFF 452 clears the stored BPWM signal when both the ALL ON/OFF status latch (RSFF 424) and the PWM latch (RSFF 454) acknowledge this request through a gate 460. Under specific conditions, a signal ATFS may be input to a gate 462 at line 464 to force the PWM latch (RSFF 454) to be reset. The PWM latch (RSFF 454) is also reset by a low ALL ON/OFF status at line 466 or a low IREG signal after completion of the diode recovery current blanking interval. The PWM latch (RSFF 454) is set similarly to the ALL ON/OFF status latch (RSFF 424) by a high IREG signal along with DFF 452 storing the BPWM signal.

The inverse PWM signal PWMB provides a reset to ripple counter 410 for the time that current drive of motor 112 is turned off either due to a PWM off condition or an ALL OFF condition. When PWMB is low, the one of power switches 110 being pulse width modulated turns on (e.g., lower power switch 218C in Fig. 2B). Further, ripple counter 410 re-initiates timing of the diode recovery current blanking interval in response to PWMB being low. In this manner, ripple counter 410 synchronizes the blanking interval with the beginning of the PWM on condition.

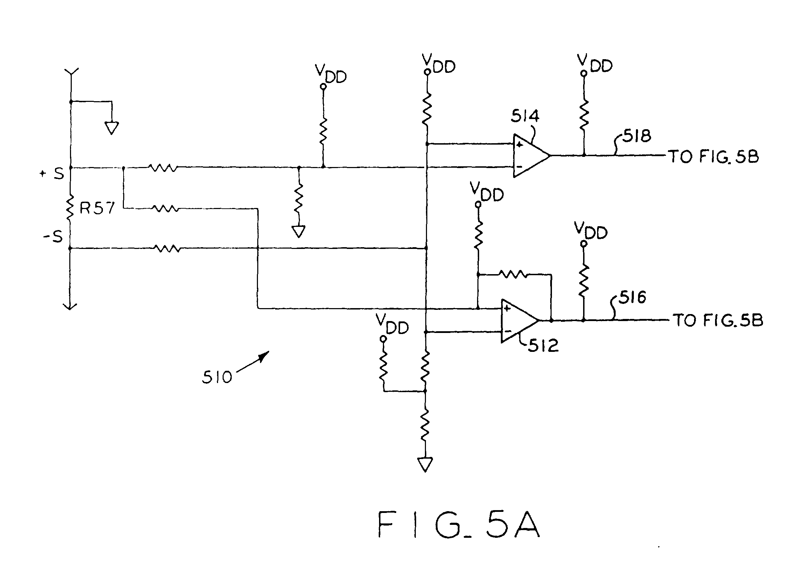

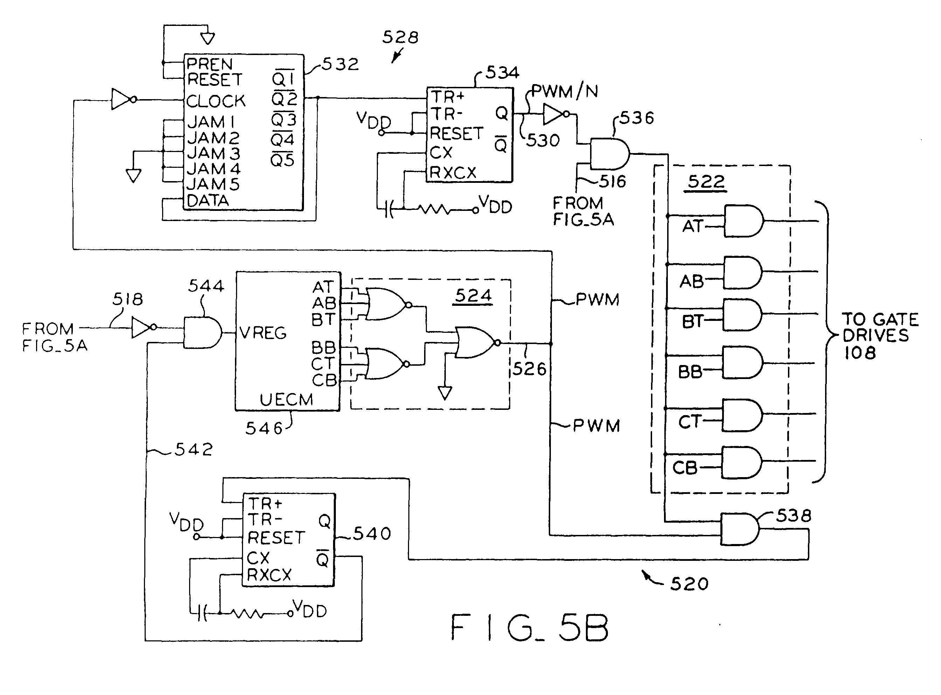

Figs. 5A-B shows another embodiment of the present invention in block and schematic diagram form. Shunt R57 detects current flowing in the windings of motor 112 when one of upper switches 216A-C and one of lower switches 218A-C are conducting or when both of these devices are turned off and force reverse current through two of flyback diodes 220A-C and 222A-C, the bulk capacitor and shunt R57. As shown in Fig. 5A, a bi-directional comparator circuit 510 senses current from power supply 128 and sets a negative current limit threshold with a comparator 512 and a positive current limit threshold with a comparator 514. The comparators 512 and 514 have outputs at lines 516 and 518, respectively. In this embodiment, comparator 514 detects a current limit when the current in shunt R57 is in the normal positive direction and indicates a positive overcurrent condition with a low output signal at line 518. Likewise, comparator 512 detects a current limit when the current in shunt R57 is in the negative direction and indicates a negative overcurrent condition with a low output signal at line 516. As described above, an overcurrent condition in shunt R57 in the positive direction does not necessarily indicate increasing circulating currents due to an abnormal operating condition. When the positive direction current exceeds the current regulate threshold during the ALL OFF SET WINDOW, one can infer that the overcurrent condition is due to abnormal circulating currents. The presence of abnormal circulating currents can also be inferred from the magnitude of reverse currents flowing in shunt R57 when both conducting devices of power switches 110 are first turned off. However, if all of power switches 110 are turned off each time an overcurrent condition is detected in the positive direction, performance will be degraded. That is, the peak-to-peak ripple current in the winding will increase so that the average current will decrease for a given peak current. Additionally, switching loss in the power devices will increase.

According to this alternative embodiment of the invention, the number of gate turn-off events during pulse width modulation is counted after detection of a positive current exceeding the current regulate threshold. For example, if upper switch 216B is normally conducting and lower switch 218C is being pulse width modulated, additional control circuitry 520 counts the turn-offs of both devices in the current carrying path (switches 216B and 218C). All of power switches 110 are then periodically caused to be in the nonconducting state for regulating current.

Referring to Fig. 5B, the output of bi-directional comparator 510 is input to a drive enable/disable circuit 522 which can disable all of gate drives 108 simultaneously after n turn-off events following detection of a positive overcurrent condition. In this preferred embodiment, a logic translation circuit 524 comprised of a NOR-NOR network decodes the gate signals to a single PWM signal at line 526. A divide-by-n circuit 528 constitutes a timing circuit which counts the number of PWM turn-offs, and outputs a short duration pulse via line 530 every n turn-offs. In the embodiment illustrated in Fig. 5B, a counter, such as a shift register 532, and a one-shot circuit 534 constitute the divide-by-n circuit 528.

The outputs of the one-shot circuit 534 at line 530 and bi-directional comparator 510 at line 516 are input to the drive enable/disable circuit 522 through an AND gate 536. In turn, drive enable/disable circuit 522 disables all of gate drives 108 for turning off each of power switches 110 simultaneously after n turn-off events when either the PWM/n signal is high or the negative limit control signal from comparator 512 is low (indicating an overcurrent condition in the negative direction). An AND gate 538 in combination with another one-shot circuit 540 provide a signal indicating with gate drives 108 are re-enabled by an acceptable condition on the current limit circuits of bi-directional comparator 510. The signal via line 542 is input to an AND gate 544 along with the output of comparator 514 inverted. The gate 544 in turn provides an input signal to a UECM 546 at a voltage regulation pin VREG. The UECM 546 generates signals for controlling gate drives 108 for switching power switches 110. The overall result of this divide-by-n strategy is that the performance of motor 112 will not degrade as much as it would if both conducting power switches 110 were turned off after each PWM stroke (the n=1 case). Also, a degree of safety and protection from abnormal circulating currents is achieved without having continuous knowledge of the motor winding currents.

Preferably, n is an integer determined as a function of the acceptable amount of time that system 100 can be blind to circulating currents. This time depends on parameters associated with motor 112 that regulate the rise time of the currents in the windings, such as the winding resistance, winding inductance, and the back EMF. For example, if the PWM period is 50 microseconds, and a designer of system 100 thinks that trouble can occur in 225 microseconds, then the disabling sequence preferably occurs after no more than four PWM periods. In this example, n is set to be less than or equal to four.

Referring again to Fig. 4, yet another embodiment of the invention combines the features of the preferred embodiment of Fig. 1 and the preferred embodiment of Figs. 5A-B. As shown in Fig. 4, an input ALOFF to RSFF 424 provides a signal for resetting the ALL ON/OFF status latch (RSFF 424). For example, the ALOFF signal represents an overcurrent, overvoltage, underspeed or other condition for which turning off power switches 110 may be required. In the alternative, the ALOFF signal represents a PWM/n signal and ASIC 104 performs the divide-by-n strategy described above with respect to Figs. 5A-B. In this embodiment of the invention, ASIC 104 counts the number of PWM turn-off events by counting the number of high pulses of the PWMB signal. Thus, ASIC 104 performs the functions of logic translation circuit 524, divide-by-n circuit 528 and drive enable/disable circuit 522.

In view of the above, it will be seen that the several objects of the invention are achieved and other advantageous results attained.

As various changes could be made in the above constructions and methods without departing from the scope of the invention as defined by the following claims, it is intended that all matter contained in the above description or shown in the accompanying drawings shall be interpreted as illustrative and not in a limiting sense.

## Claims

1. A motor (100) comprising:
a stationary assembly and a rotatable assembly in magnetic coupling relation thereto, the stationary assembly including windings to be energized in at least one preselected sequence;
a power supply link (132,110,134) for connecting the windings to a power supply (128), the power supply link including power switching devices (110) for selectively energizing the windings in the preselected sequence by selectively connecting the power supply link to the windings to produce an electromagnetic field for rotating the rotatable assembly, the power switching devices each having a conducting state and a non-conducting state;
characterized by:
a current regulation circuit (104) including
a timing circuit for defining periods during which each of the power switching devices may be non-conducting;
a current sensing circuit for sensing current in the power supply link; and
a control circuit (142) for controlling the power switching devices so that each of the power switching devices is non-conducting only during portions of the defined periods during which the sensed current exceeds a peak current reference level.

2. The motor of claim 1 wherein the power switching devices comprise an inverter bridge (210) having a positive rail (212) and a negative rail (214) supplied by the power supply.

3. The motor of claim 2 wherein the current sensing circuit senses current in only one of the rails (214) of the power supply link.

4. The motor of claims 2 or 3 wherein the current sensing circuit comprises a shunt resistor (R57) for sensing current in only one of the rails (214) of the power supply link.

5. The motor of any one of the preceding claims wherein the current sensing circuit comprises a bi-directional current comparator (140) for comparing the sensed current in the power supply link to a positive current reference level when the sensed current is positive and for comparing the sensed current in the power supply link to a negative peak current reference level when the sensed current is negative.

6. The motor of claim 5 further comprising a network (308,310) for scaling the sensed current input to the current comparator (312,314).

7. The motor of claims 5 or 6 further comprising a circuit generating the peak current reference level and including an adjustable resistor network having an adjustable resistance (322) for varying the peak current reference level.

8. The motor of any one of the preceding claims wherein each of the power switching devices (110) is non-conducting for an interval of time when the sensed current exceeds the peak current reference level during the defined periods whereby current which circulates during periods when only one power switching device is conducting is reduced.

9. The motor of any one of the preceding claims wherein the current sensing circuit generates an overcurrent signal (IREG) in response to the sensed current exceeding the peak current reference level.

10. The motor of any one of the preceding claims wherein the timing circuit comprises a current blanking circuit (410) for inhibiting the overcurrent signal during a blanking interval triggered by the energization of the windings.

11. The motor of claim 10 wherein the control circuit (142) is responsive to the overcurrent signal (IREG) whereby the power switching devices are non-conducting during the defined periods except during the blanking interval.

12. The motor of any one of claim 9 to 12 further comprising free-wheeling diodes (220A,220B,220C) corresponding to and connected across respective ones of the power switching devices (216A,216B,216C), and wherein the rails (212,214) of the power supply link normally carry a diode recovery current at energization, the blanking interval exceeding an interval of time corresponding to a time period during which the diode recovery current decays below a level.

13. The motor of any one of claims 10 to 12 wherein the current blanking circuit (140) comprises a blanking interval counter for timing the blanking interval, the blanking interval counter generating a blanking signal for inhibiting the control circuit during the blanking interval.

14. The motor of claim 13 wherein the control circuit comprises an RS flip flop (424) responsive during the defined periods to the overcurrent signal (IREG) for generating a control signal for controlling the power switches so that each of the power switching devices is non-conducting, the blanking interval counter providing the blanking signal and a window signal that defines the defined periods to the RS flip flop whereby during the defined periods the RS flip flop generates the control signal in response to the overcurrent signal except during the blanking interval.

15. The motor of any one of claims 10 to 14 wherein the defined periods during which each of the power switching devices may be non-conducting includes a first period of approximately 20 microseconds beginning with the energization of the windings and wherein the blanking interval is approximately one-half of the first period.

16. The motor of any one of the preceding claims wherein the control circuit (142) controls the power switching devices (110) so that each of the power switching devices is non-conducting when the sensed current exceeds a negative peak current reference level.

17. The motor of any one of the preceding claims further comprising a pulse width modulation circuit for pulse width modulating (218C) the power being provided to at least one of the windings at a duty cycle having alternating on and off periods, the timing circuit defining the defined periods to be a predetermined number of off periods after the sensed current exceeds a positive peak current reference level.

18. The motor of claim 17 wherein the timing circuit comprises a counter for counting the predetermined number of off periods.

19. The motor of claims 17 or 18 wherein the predetermined number is a positive integer greater than 1.

20. The motor of any one of claims 8 to 19 wherein the control circuit (142) defines a first period during which each of the power switching devices (110) may be non-conducting and for controlling the power switching devices so that each of the power switching devices is non-conducting when the sensed current exceeds a peak current reference level during the first period except during the predetermined blanking interval.

21. The motor of claim 20 wherein each of the power switching devices is non-conducting for an interval of time when the sensed current exceeds the peak current reference level during the first period.

22. The motor of claims 20 or 21 wherein the control circuit defines a second period during which each of the power switching devices may be non-conducting and controls the power switching devices so that each of the power switching devices is non-conducting when the sensed current exceeds a negative peak current reference level during the second period, the control circuit defining the second period to be a predetermined number of off periods after the sensed current exceeds a positive peak current reference level.

23. The motor of any one of the preceding claims wherein the timing circuit defines a first period during which each of the power switching devices may be non-conducting, the timing circuit defining the first period to be a predetermined number of off periods after when the sensed current exceeds a first peak current reference level, the current regulation circuit controlling the power switching devices so that each of the power switching devices is non-conducting when the sensed current exceeds a second peak current reference level during the first period.

24. An application specific integrated circuit (ASIC) for use with a motor having a stationary assembly and a rotatable assembly in magnetic coupling relation thereto, the stationary assembly including windings to be energized in at least one preselected sequence; the circuit comprising:
a power supply link (132,110,134) for connecting the windings to a power supply (128), the power supply link including power switching devices (110) for selectively energizing the windings in the preselected sequence by selectively connecting the power supply link to the windings to produce an electromagnetic field for rotating the rotatable assembly, the power switching devices each having a conducting state and a non-conducting state; and a current regulating circuit (104),
characterized in that the a current regulation circuit comprises:
a timing circuit for defining periods during which each of the power switching devices may be non-conducting;
a current sensing circuit for sensing current in the power supply link; and
a control circuit (142) for controlling the power switching devices so that each of the power switching devices is non-conducting only during portions of the defined periods during which the sensed current exceeds a peak current reference level.

25. A method of regulating current for controlling excessive circulating currents in a power supply link (132,110,134) of a motor, the motor having a stationary assembly in magnetic coupling relation with a rotatable assembly, the stationary assembly including windings to be energized in a preselected sequence, the power link having power switching devices (110) each having a conducting and a non-conducting state and forming an inverter bridge with a positive rail (212) and negative rail (214) supplied by a power supply (128), characterized by the steps of:
selectively energizing the windings in the preselected sequence by selectively connecting the power supply link to the windings to produce an electromagnetic field for rotating the rotatable assembly;
regulating the current by defining periods during which each of the power switching devices may be non-conducting;
sensing current in only one of the rails of the power supply link; and
controlling (142) the power switching devices so that each of the power switching devices is non-conducting only during portions of the defined periods during which the sensed current exceeds a peak current reference level.

26. The method of claim 25 comprising the further steps of:
generating an overcurrent signal (IREG) in response to the sensed current exceeding the peak current reference level;
inhibiting the overcurrent signal during a blanking interval triggered by the energization of the windings; and
controlling the power switching devices so that each of the power switching devices is non-conducting in response to the overcurrent signal whereby the power switching devices are non-conducting during the defined periods except during the blanking interval.

27. The method of claims 25 or 26 comprising the further steps of:
pulse width modulating (218C) the power being provided to at least one of the windings at a duty cycle having alternating on and off periods;
controlling the power switching devices so that each of the power switching devices is non-conducting when the sensed current exceeds a negative peak current reference level during defined periods, and the regulating current step defining the defined periods to be a predetermined number of off periods after the sensed current exceeds a positive peak current reference level.

## Patentansprüche

1. Motor (100) enthaltend:
eine stationäre Anordnung und eine drehbare Anordnung in einer magnetischen Kopplungsrelation miteinander, wobei die stationäre Anordnungen Wicklungen aufweist, die in wenigstens einer vorgewählten Folge zu speisen sind,
eine Energieversorgungsverbindung (132, 110, 134) zum Verbinden der Wicklungen mit einer Energieversorgung (128), wobei die Energieversorgungsverbindung Leistungsschaltvorrichtungen (110) zum selektiven Speisen der Wicklungen in der vorgewählten Folge aufweist durch selektives Verbinden der Energieversorgungsverbindung mit den Wicklungen, um ein elektromagnetisches Feld zum Drehen der drehbaren Anordnung zu erzeugen, wobei die Leistungsschaltvorrichtungen jeweils einen leitenden Zustand und einen nicht-leitenden Zustand haben,
gekennzeichnet durch:
eine Stromregelschaltung (104) mit einer Zeitsteuerschaltung zum Definieren von Perioden, in denen jede der Leistungsschaltvorrichtungen nicht-leitend sein kann,
eine Stromabtastschaltung zum Abtasten von Strom in der Stromversorgungsverbindung und
eine Steuerschaltung (142) zum Steuern der Leistungsschaltvorrichtungen derart, so daß jede der Leistungsschaltvorrichtungen nur während Abschnitten von den definierten Perioden nicht-leitend ist, in denen der abgetastete Strom einen Spitzenstrom-Referenzwert überschreitet.

2. Motor nach Anspruch 1, wobei die Leistungsschaltvorrichtungen eine Wechselrichterbrücke (210) mit einer positiven Schiene (212) und einer negativen Schiene (216) aufweisen, die durch die Energieversorgung gespeist sind.

3. Motor nach Anspruch 2, wobei die Stromabtastschaltung den Strom in nur einer der Schienen (214) der Energieversorgungsverbindung abtastet.

4. Motor nach Anspruch 2 oder 3, wobei die Stromabtastschaltung einen Shunt-Widerstand (R57) zum Abtasten von Strom in nur einer der Schienen (214) der Energieversorgungsverbindung aufweist.

5. Motor nach einem der vorstehenden Ansprüche, wobei die Stromabtastschaltung einen bidirektionalen Stromkomparator (140) aufweist zum Vergleichen des abgetasteten Stroms in der Energieversorgungsverbindung mit einem positiven Stromreferenzwert, wenn der abgetastete Strom positiv ist, und zum Vergleichen des abgetasteten Stroms in der Energieversorgungsverbindung mit einem negativen Spitzenstrom-Referenzwert, wenn der abgetastete Strom negativ ist.

6. Motor nach Anspruch 5, wobei ferner eine Schaltungsanordnung (308, 310) zum Skalieren des abgetasteten Stroms vorgesehen ist, der in den Stromkomparator (312, 314) eingegeben wird.

7. Motor nach Anspruch 5 oder 6, wobei ferner eine Schaltungsanordnung zum Generieren des Spitzenstrom-Referenzwertes und ein einstellbares Widerstandsnetzwerk mit einem einstellbaren Widerstand (322) zum Verändern des Spitzenstrom-Referenzwertes vorgesehen sind.

8. Motor nach einem der vorstehenden Ansprüche, wobei jede der Leistungsschaltvorrichtungen (110) für ein Zeitintervall nicht-leitend ist, wenn der abgetastete Strom den Spitzenstrom-Referenzwert während der definierten Perioden überschreitet, wodurch Strom, der während Perioden zirkuliert, in denen nur eine Leistungsschaltvorrichtung leitend ist, verkleinert wird.

9. Motor nach einem der vorstehenden Ansprüche, wodurch die Stromabtastschaltung ein Überstromsignal (IREG) als Antwort auf den abgetasteten Strom generiert, der den Spitzenstrom-Referenzwert überschreitet.

10. Motor nach einem der vorstehenden Ansprüche, wobei die Zeitsteuerschaltung eine Stromaustastschaltung (410) aufweist zum Hemmen des Überstromsignals während eines Austastintervalls, das durch die Speisung der Wicklungen ausgelöst wird.

11. Motor nach Anspruch 10, wobei die Steuerschaltung (124) auf das Überstromsignal (IREG) anspricht, wodurch die Leistungsschaltvorrichtungen während der definierten Perioden nicht-leitend sind, außer während des Stromaustastintervalls.

12. Motor nach einem der Ansprüche 9 bis 12, wobei ferner Freilauf-Dioden (220A, 220B, 220C) vorgesehen sind, die entsprechenden Leistungsschaltvorrichtungen (216A, 216B, 216C) entsprechen und diesen parallel geschaltet sind, und wobei die Schienen (212, 214) der Energieversorgungsverbindung bei Speisung normalerweise einen Diodenerholungsstrom führen, wobei das Austastintervall größer ist als ein Zeitintervall, das einer Zeitperiode entspricht, während der der Diodenerholungsstrom unter einen Pegel abfällt.

13. Motor nach einem der Ansprüche 10 bis 12, wobei die Stromabtastschaltung (140) einen Austastintervallzähler zur Zeitsteuerung des Austastintervalls aufweist, wobei der Austastintervallzähler ein Austastsignal generiert zum Hemmen der Steuerschaltung während des Austastintervalls.

14. Motor nach Anspruch 13, wobei die Steuerschaltung ein RS Flipflop (424) aufweist, das während der definierten Perioden auf das Überstromsignal (IREG) anspricht zum Generieren eines Steuersignals zum Steuern der Leistungsschalter derart, daß jede der Leistungsschaltvorrichtungen nicht-leitend ist, wobei der Austastintervallzähler das Austastsignal und ein Fenstersignal liefert, das die definierten Perioden für das RS Flipflop definiert, wodurch während der definierten Perioden das RS Flipflop das Steuersignal als Antwort auf das Überstromsignal, außer während des Austastintervalls, generiert.

15. Motor nach einem der Ansprüche 10 bis 14, wobei die definierten Perioden, während der jede der Leistungsschaltvorrichtungen nicht-leitend sein kann, eine erste Periode von etwa 20 Mikrosekunden aufweist, die mit der Speisung der Wikklungen beginnt, und wobei das Austastintervall etwa eine Hälfte der ersten Periode ist.

16. Motor nach einem der vorstehenden Ansprüche, wobei die Steuerschaltung (142) die Leistungsschaltvorrichtungen (110) derart steuert, daß jede der Leistungsschaltvorrichtungen nicht-leitend ist, wenn der abgetastete Strom einen negativen Spitzenstrom-Referenzwert überschreitet.

17. Motor nach einem der vorstehenden Ansprüche, wobei ferner eine Pulsbreiten-Modulationsschaltung für eine Pulsbreitenmodulation (218C) der Energie vorgesehen ist, die wenigstens einer der Wicklungen bei einem Tastverhältnis mit abwechselnden EIN- und AUS-Perioden zugeführt ist, wobei die Zeitsteuerschaltung die definierten Perioden derart definiert, daß sie eine vorbestimmte Anzahl von AUS-Perioden sind, nachdem der abgetastete Strom einen positiven Spitzenstrom-Referenzwert überschreitet.

18. Motor nach Anspruch 17, wobei die Zeitsteuerschaltung einen Zähler zum Zählen der vorbestimmten Anzahl von Aus-Perioden aufweist.

19. Motor nach Anspruch 17 oder 18, wobei die vorbestimmte Anzahl eine positive ganze Zahl größer als 1 ist.

20. Motor nach einem der Ansprüche 8 bis 19, wobei die Steuerschaltung (142) eine erste Periode definiert, während der jede der Leistungsschaltvorrichtungen (110) nicht-leitend sein kann, und zum Steuern der Leistungsschaltvorrichtungen derart, daß jede der Leistungsschaltvorrichtungen nicht-leitend ist, wenn der abgetastete Strom einen Spitzestrom-Referenzwert während der ersten Periode überschreitet, außer während des vorbestimmten Austastintervalls.

21. Motor nach Anspruch 20, wobei jede der Leistungsschaltvorrichtungen für ein Zeitintervall nicht-leitend ist, wenn der abgetastete Strom den Spitzenstrom-Referenzwert während der ersten Periode überschreitet.

22. Motor nach Anspruch 20 oder 21, wobei die Steuerschaltung eine zweite Periode definiert, während der jede der Leistungsschaltvorrichtungen nicht-leitend sein kann, und die Leistungsschaltvorrichtungen so steuert, daß jede der Leistungsschaltvorrichtungen nicht-leitend ist, wenn der abgetastete Strom einen negativen Spitzenstrom-Referenzwert während der zweiten Periode überschreitet, wobei die Steuerschaltung die zweite Periode so definiert, daß sie eine vorbestimmte Anzahl von Aus-Perioden ist, nachdem der abgetastete Strom einen positiven Spitzenstrom-Referenzwert überschreitet.

23. Motor nach einem der vorstehenden Ansprüche, wobei die Zeitsteuerschaltung eine erste Periode definiert, während der jede der Leistungsschaltvorrichtungen nicht-leitend sein kann, wobei die Zeitsteuerschaltung die erste Periode so definiert, daß sie eine vorbestimmte Anzahl von Aus-Perioden ist, nachdem der abgetastete Strom einen ersten Spitzenstrom-Referenzwert überschreitet, wobei die Stromregelschaltung die Leistungsschaltvorrichtungen so steuert, daß jede der Leistungsschaltvorrichtungen nicht-leitend ist, wenn der abgetastete Strom einen zweiten Spitzenstrom-Referenzwert während der ersten Periode überschreitet.

24. Anwendungsspezifische Integrierte Schaltung (ASIC) zur Verwendung mit einem Motor, der eine stationäre Anordnung und eine drehbare Anordnung in einer magnetischen Kopplungsrelation damit aufweist, wobei die stationäre Anordnung Wicklungen aufweist, die in wenigstens einer vorgewählten Folge zu speisen sind, wobei die Schaltungsanordnung enthält:
eine Energieversorgungsverbindung (132, 110, 134) zum Verbinden der Wicklungen mit einer Energieversorgung (128), wobei die Energieversorgungsverbindung Leistungsschaltvorrichtungen (110) zum selektiven Speisen der Wicklungen in der vorgewählten Folge aufweist durch selektives Verbinden der Energieversorgungsverbindung mit den Wicklungen, um ein elektromagnetisches Feld zum Drehen der drehbaren Anordnung zu erzeugen, wobei die Leistungsschaltvorrichtungen jeweils einen leitenden Zustand und einen nicht-leitenden Zustand haben, und eine Stromregelschaltung (104),
dadurch gekennzeichnet, daß die Stromregelschaltung enthält:
eine Zeitsteuerschaltung zum Definieren von Perioden,
in denen jede der Leistungsschaltvorrichtungen nicht-leitend sein kann,
eine Stromabtastschaltung zum Abtasten von Strom in der Stromversorgungsverbindung und
eine Steuerschaltung (142) zum Steuern der Leistungsschaltvorrichtungen derart, so daß jede der Leistungsschaltvorrichtungen nur während Abschnitten von den definierten Perioden nicht-leitend ist, in denen der abgetastete Strom einen Spitzenstrom-Referenzwert überschreitet.

25. Verfahren zur Stromregelung zum Steuern von übermäßigen zirkulierenden Strömen in einer Energieversorgungsschaltung (132, 110, 134) von einem Motor, wobei der Motor eine stationäre Anordnung in einer magnetischen Kopplungsrelation mit einer drehbaren Anordnung aufweist, die stationäre Anordnung Wicklungen aufweist, die in einer vorgewählten Folge zu speisen sind, die Leistungsverbindung Leistungsschaltvorrichtungen (110) enthält, die jeweils einen leitenden und einen nicht-leitenden Zustand haben und eine Wechselrichterbrücke mit einer positiven Schiene (212) und einer negativen Schiene (214) bilden, die durch eine Energieversorgung (128) gespeist werden, gekennzeichnet durch die Schritte:
selektives Erregen der Wicklungen in der vorgewählten Folge durch selektives Verbinden der Energieversorgungsverbindung mit den Wicklungen, um ein elektromagnetisches Feld zum Drehen der drehbaren Anordnung zu erzeugen,
Regeln des Stroms, indem Perioden definiert werden, während der jede der Leistungsschaltvorrichtungen nicht-leitend sein kann,
Abtasten von Strom in nur einer der Schienen der Energieversorgungsverbindung und
Steuern (142) der Leistungsschaltvorrichtungen derart, daß jede der Leistungsschaltvorrichtungen nur während Abschnitten von den definierten Perioden nicht-leitend ist, in denen der abgetastete Strom einen Spitzenstrom-Referenzwert überschreitet.

26. Verfahren nach Anspruch 25, wobei ferner die Schritte vorgesehen sind:
Generieren eines Überstromsignals (IREG) als Antwort auf den abgetasteten Strom, der den Spitzenstrom-Referenzwert überschreitet,
Hemmen des Überstromsignals während eines Austastintervalls, das durch die Erregung der Wicklungen ausgelöst wird, und
Steuern der Leistungsschaltvorrichtungen derart, daß jede Leistungsschaltvorrichtung als Antwort auf das Überstromsignal nicht-leitend ist, wodurch die Leistungsschaltvorrichtungen während der definierten Perioden, außer während des Austastintervalls, nicht-leitend sind.

27. Verfahren nach Anspruch 25 oder 26, enthaltend die weiteren Schritte:
Pulsbreitenmodulieren (218C) der Energie, die wenigstens einer der Wicklungen bei einem Tastverhältnis mit abwechselnden Ein- und Aus-Perioden zugeführt wird,
Steuern der Leistungsschaltvorrichtungen derart, daß jede der Leistungsschaltvorrichtungen nicht-leitend ist, wenn der abgetastete Strom einen negativen Spitzenstrom-Referenzwert während definierter Perioden überschreitet, und der Stromregelschritt die definierten Perioden derart definiert, daß sie eine vorbestimmte Anzahl von Aus-Perioden sind, nachdem der abgetastete Strom einen positiven Spitzenstrom-Referenzwert überschreitet.

## Revendications

1. Moteur (100) comprenant :
un assemblage fixe et un assemblage rotatif en relation de couplage magnétique avec ce dernier, l'assemblage fixe comprenant des enroulements devant être mis sous tension en au moins une séquence présélectionnée;
une liaison d'alimentation (132, 110, 134) pour connecter les enroulements à une alimentation (128), la liaison d'alimentation incluant des dispositifs de commutation de puissance (110) servant à mettre sous tension les enroulements de manière sélective suivant la séquence présélectionnée en connectant de manière sélective la liaison d'alimentation aux enroulements pour produire un champ électromagnétique afin de mettre l'assemblage rotatif en rotation, les dispositifs de commutation de puissance présentant chacun un état conducteur et un état non conducteur;
caractérisé par :
un circuit de régulation de courant (104) incluant
un circuit de temporisation servant à définir des périodes pendant lesquelles chacun des dispositifs de commutation de puissance peut être non conducteur;
un circuit de détection de courant servant à détecter le courant passant dans la liaison d'alimentation; et
un circuit de commande (142) servant à commander les dispositifs de commutation de puissance de façon que chacun des dispositifs de commutation de puissance soit non conducteur seulement sur des parties des périodes définies pendant lesquelles l'intensité du courant détecté dépasse un niveau de référence de courant de crête.

2. Moteur selon la revendication 1, dans lequel les dispositifs de commutation de puissance comprennent un pont formant onduleur (210) comportant un pôle positif (212) et un pôle négatif (214) alimentés par l'alimentation.

3. Moteur selon la revendication 2, dans lequel le circuit de détection de courant ne détecte le courant que dans un des pôles (214) de la liaison d'alimentation.

4. Moteur selon la revendication 2 ou 3, dans lequel le circuit de détection de courant comprend une résistance de shunt (R57) servant à détecter le courant dans un seul des pôles (214) de la liaison d'alimentation.

5. Moteur selon l'une quelconque des revendications précédentes, dans lequel le circuit de détection de courant comprend un comparateur de courant bidirectionnel (140) servant à comparer le courant détecté dans la liaison d'alimentation à un niveau de référence de courant positif quand le courant détecté est positif et à comparer le courant détecté dans la liaison d'alimentation à un niveau de référence de courant de crête négatif quand le courant détecté est négatif.

6. Moteur selon la revendication 5, comprenant de plus un réseau (308, 310) servant à mettre à l'échelle le signal d'entrée de courant détecté du comparateur de courant (312, 314).

7. Moteur selon la revendication 5 ou 6, comprenant de plus un circuit générant le niveau de référence de courant de crête et incluant un réseau à résistance réglable comportant une résistance réglable (322) servant à faire varier le niveau de référence de courant de crête.

8. Moteur selon l'une quelconque des revendications précédentes, dans lequel chacun des dispositifs de commutation de puissance (110) est non conducteur pendant une certaine durée lorsque le courant détecté dépasse le niveau de référence du courant de crête pendant les périodes définies, réduisant ainsi l'intensité du courant qui circule pendant les périodes où seul un dispositif de commutation de puissance est conducteur.

9. Moteur selon l'une quelconque des revendications précédentes, dans lequel le circuit de détection de courant génère un signal de surintensité (IREG) en réponse au courant détecté dépassant le niveau de référence de courant de crête.

10. Moteur selon l'une quelconque des revendications précédentes, dans lequel le circuit de temporisation comprend un circuit de suppression de courant (410) servant à inhiber le signal de surintensité pendant un intervalle de suppression déclenché par la mise sous tension des enroulements.

11. Moteur selon la revendication 10, dans lequel le circuit de commande (142) réagit au signal de surintensité (IREG), rendant ainsi les dispositifs de commutation de puissance non conducteurs pendant les périodes définies sauf pendant l'intervalle de suppression.

12. Moteur selon l'une quelconque des revendications 9 à 12, comprenant de plus des diodes de roue libre (220A, 220B, 220C) correspondant à des dispositifs de commutation de puissance respectifs (216A, 216B, 216C) et connectées aux bornes de ceux-ci, et dans lequel les pôles (212, 214) de la liaison d'alimentation amènent normalement un courant de recouvrement de diode à la mise sous tension, l'intervalle de suppression dépassant un intervalle de temps correspondant à une période de temps pendant laquelle le courant de recouvrement de diode décroît sous un certain niveau.

13. Moteur selon l'une quelconque des revendications 10 à 12, dans lequel le circuit de suppression de courant (140) comprend un compteur d'intervalle de suppression servant à temporiser l'intervalle de suppression, le compteur d'intervalle de suppression générant un signal de suppression pour inhiber le circuit de commande pendant l'intervalle de suppression.

14. Moteur selon la revendication 13, dans lequel le circuit de commande comprend une bascule RS (424) réagissant pendant les périodes définies au signal de surintensité (IREG) pour générer un signal de commande afin de commander les commutateurs de puissance de façon que tous les dispositifs de commutation de puissance soient non conducteurs, le compteur d'intervalle de suppression produisant le signal de suppression et un signal de fenêtre qui définit les périodes définies à la bascule RS, la bascule RS générant ainsi pendant les périodes définies le signal de commande en réponse au signal de surintensité, sauf pendant l'intervalle de suppression.

15. Moteur selon l'une quelconque des revendications 10 à 14, dans lequel les périodes définies pendant lesquelles chacun des dispositifs de commutation de puissance peut être non conducteur incluent une première période d'environ 20 microsecondes commençant avec la mise sous tension des enroulements et dans lequel l'intervalle de suppression vaut environ la moitié de la première période.

16. Moteur selon l'une quelconque des revendications précédentes, dans lequel le circuit de commande (142) commande les dispositifs de commutation de puissance (110) de façon que chacun des dispositifs de commutation de puissance soit non conducteur lorsque le courant détecté dépasse un niveau de référence de courant de crête négatif.

17. Moteur selon l'une quelconque des revendications précédentes, comprenant de plus un circuit de modulation de largeur d'impulsion servant à effectuer une modulation de largeur d'impulsion (218C) de la puissance fournie à au moins l'un des enroulements avec un rapport cyclique comportant des périodes marche et arrêt alternées, le circuit de temporisation définissant les périodes définies comme un nombre prédéterminé de périodes d'arrêt après que le courant détecté ait dépassé un niveau de référence de courant de crête positif.

18. Moteur selon la revendication 17, dans lequel le circuit de temporisation comprend un compteur servant à compter le nombre prédéterminé de périodes d'arrêt.

19. Moteur selon la revendication 17 ou 18, dans lequel le nombre prédéterminé est un entier positif supérieur à 1.

20. Moteur selon l'une quelconque des revendications 8 à 19, dans lequel le circuit de commande (142) définit une première période pendant laquelle chacun des dispositifs de commutation de puissance (110) peut être non conducteur et servant à commander les dispositifs de commutation de puissance de sorte que chacun des dispositifs de commutation de puissance est non conducteur quand le courant détecté dépasse un niveau de référence de courant de crête pendant la première période sauf pendant l'intervalle de suppression prédéterminé.

21. Moteur selon la revendication 20, dans lequel chacun des dispositifs de commutation de puissance est non conducteur pour une certaine durée quand le courant détecté dépasse le niveau de référence de courant de crête pendant la première période.

22. Moteur selon la revendication 20 ou 21, dans lequel le circuit de commande définit une deuxième période pendant laquelle chacun des dispositifs de commutation de puissance peut être non conducteur et commande les dispositifs de commutation de puissance de sorte que chacun des dispositifs de commutation de puissance est non conducteur quand le courant détecté dépasse un niveau de référence de courant de crête négatif pendant la deuxième période, le circuit de commande définissant la deuxième période comme étant un nombre prédéterminé de périodes d'arrêt après que le courant détecté ait dépassé un niveau de référence de courant de crête positif.

23. Moteur selon l'une quelconque des revendications précédentes, dans lequel le circuit de temporisation définit une première période pendant laquelle chacun des dispositifs de commutation de puissance peut être non conducteur, le circuit de temporisation définissant la première période comme étant un nombre prédéterminé de périodes d'arrêt après que le courant détecté ait dépassé un premier niveau de référence de courant de crête, le circuit de régulation de courant commandant les dispositifs de commutation de puissance de sorte que chacun des dispositifs de commutation de puissance est non conducteur quand le courant détecté dépasse un deuxième niveau de référence de courant de crête pendant la première période.

24. Circuit intégré d'application spécifique (ASIC) destiné à être utilisé avec un moteur comportant un assemblage fixe et un assemblage rotatif en relation de couplage magnétique avec ce dernier, l'assemblage fixe comprenant des enroulements devant être mis sous tension en au moins une séquence présélectionnée; le circuit comprenant :
une liaison d'alimentation (132, 110, 134) pour connecter les enroulements à une alimentation (128), la liaison d'alimentation incluant des dispositifs de commutation de puissance (110) servant à mettre sous tension les enroulements de manière sélective suivant la séquence présélectionnée en connectant de manière sélective la liaison d'alimentation aux enroulements pour produire un champ électromagnétique afin de mettre l'assemblage rotatif en rotation, les dispositifs de commutation de puissance présentant chacun un état conducteur et un état non conducteur; et un circuit de régulation de courant (104),
caractérisé en ce que le circuit de régulation de courant comprend :
un circuit de temporisation servant à définir des périodes pendant lesquelles chacun des dispositifs de commutation de puissance peut être non conducteur;
un circuit de détection de courant servant à détecter le courant passant dans la liaison d'alimentation; et
un circuit de commande (142) servant à commander les dispositifs de commutation de puissance de façon que chacun des dispositifs de commutation de puissance soit non conducteur seulement sur des parties des périodes définies pendant lesquelles l'intensité du courant détecté dépasse un niveau de référence de courant de crête.

25. Procédé de régulation de courant servant à contrôler des courants circulants excessifs dans une liaison d'alimentation (132, 110, 134) d'un moteur, le moteur comprenant un assemblage fixe en relation de couplage magnétique avec un assemblage rotatif, l'assemblage fixe comprenant des enroulements devant être mis sous tension en une séquence présélectionnée, la liaison d'alimentation comportant des dispositifs de commutation de puissance (110) présentant chacun un état conducteur et un état non conducteur et formant un onduleur avec un pôle positif (212) et un pôle négatif (214) alimenté par une alimentation (128), caractérisé par les étapes consistant à :
mettre sous tension les enroulements de manière sélective suivant la séquence présélectionnée en connectant de manière sélective la liaison d'alimentation aux enroulements pour produire un champ électromagnétique afin de mettre l'assemblage rotatif en rotation;
réguler le courant en définissant des périodes pendant lesquelles chacun des dispositifs de commutation de puissance peut être non conducteur;
détecter le courant dans un seul des pôles de la liaison d'alimentation; et
commander (142) les dispositifs de commutation de puissance de façon que chacun des dispositifs de commutation de puissance soit non conducteur seulement sur des parties des périodes définies pendant lesquelles l'intensité du courant détecté dépasse un niveau de référence de courant de crête.

26. Procédé selon la revendication 25, comprenant les étapes supplémentaires consistant à :
générer un signal de surintensité (IREG) en réponse au courant détecté dépassant le niveau de référence de courant de crête;
inhiber le signal de surintensité pendant un intervalle de suppression déclenché par la mise sous tension des enroulements; et
commander les dispositifs de commutation de puissance de façon que chacun des dispositifs de commutation de puissance soit non conducteur en réponse au signal de surintensité, les dispositifs de commutation de puissance étant ainsi non conducteurs pendant les périodes définies, sauf pendant l'intervalle de suppression.

27. Procédé selon la revendication 25 ou 26, comprenant les étapes supplémentaires consistant à :
effectuer une modulation de largeur d'impulsion (218C) de la puissance fournie à au moins l'un des enroulements avec un rapport cyclique comportant des périodes marche et arrêt alternées;
commander les dispositifs de commutation de puissance de façon que chacun des dispositifs de commutation de puissance soit non conducteur lorsque le courant détecté dépasse un niveau de référence de courant de crête négatif pendant des périodes définies, et l'étape de régulation du courant définissant les périodes définies comme étant un nombre prédéterminé de périodes d'arrêt après que le courant détecté ait dépassé un niveau de référence de courant de crête positif.
